(19) Europäisches Patentamt / European Patent Office / Office européen des brevets

(11) **EP 4 212 825 B1**

(12) **FASCICULE DE BREVET EUROPEEN**

(45) Date de publication et mention
de la délivrance du brevet:
**24.07.2024 Bulletin 2024/30**

(21) Numéro de dépôt: **22214721.7**

(22) Date de dépôt: **19.12.2022**

(51) Classification Internationale des Brevets (IPC):
**G01C 25/00** *(2006.01)* **G06T 7/80** *(2017.01)*
**G01S 13/92** *(2006.01)* **G01S 13/86** *(2006.01)*
**G06T 7/73** *(2017.01)*

(52) Classification Coopérative des Brevets (CPC):
**G01C 25/005; G06T 7/73;** G01S 13/867;
G01S 13/92; G06T 2207/30256

(54) **PROCÉDÉ D ALIGNEMENT D'UNE CAMÉRA SUR UNE ROUTE**

VERFAHREN ZUR AUSRICHTUNG EINER KAMERA AUF EINER STRASSE

METHOD FOR ALIGNING A CAMERA ON A ROAD

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **13.01.2022 FR 2200261**

(43) Date de publication de la demande:
**19.07.2023 Bulletin 2023/29**

(73) Titulaire: **IDEMIA Identity & Security France
92400 Courbevoie (FR)**

(72) Inventeur: **GUIDON, Eric
92400 Courbevoie (FR)**

(74) Mandataire: **Idemia
2, place Samuel de Champlain
92400 Courbevoie (FR)**

(56) Documents cités:
**EP-A1- 2 527 872    FR-A1- 2 949 896
FR-A1- 3 096 786    US-B1- 6 898 298**

• **GUIDUCCI A ED - DEBLED-RENNESSON
ISABELLE ET AL: "Camera Calibration for Road
Applications", COMPUTER VISION AND IMAGE
UNDERSTANDING, ACADEMIC PRESS, US, vol.
79, no. 2, 1 August 2000 (2000-08-01), pages 250
- 266, XP004439269, ISSN: 1077-3142, DOI:
10.1006/CVIU.2000.0857**

**Description**

**DOMAINE DE L'INVENTION**

La présente invention concerne un procédé de traitement d'une image montrant une route. Ce procédé trouve avantageusement application dans l'alignement d'une caméra d'un dispositif radar routier, par exemple mobile.

**ETAT DE LA TECHNIQUE**

Aujourd'hui, l'installation d'un dispositif radar routier à un emplacement fixe nécessite, si l'on désire obtenir une mesure précise de la vitesse d'un véhicule circulant sur une route, de déterminer précisément la position et l'orientation de la caméra du dispositif du radar routier par rapport à cette route.

En particulier, le document FR3096786 décrit un procédé permettant une telle détermination de position et d'orientation relative.

Toutefois, le procédé décrit dans le document FR3096786 a pour inconvénient de requérir l'utilisation d'un tachéomètre, qui n'est pas un appareil très simple d'utilisation et de surcroît coûteux. Ce procédé est donc mal adapté à des dispositifs radars mobiles.

Le document FR2949896 décrit un procédé d'installation d'un appareil de contrôle de véhicules qui permet de déterminer une déviation angulaire de mesure qui est utilisée pour effectuer des mesures de contrôle. La déviation angulaire de mesure est obtenue à partir d'un angle de visée optique, lui-même déterminé à partir d'un point de fuite d'une image photographique qui est saisie avec l'appareil. Le procédé peut être entièrement automatisé, et ne nécessite plus que des mesures de distances soient physiquement réalisées le long d'une route où le contrôle de véhicules est effectué. Le procédé peut être utilisé en particulier pour contrôler des vitesses des véhicules avec un système de mesure des vitesses par effet Doppler.

**EXPOSE DE L'INVENTION**

Un but de l'invention est d'aligner une caméra par rapport à une route en exploitant les informations présentes dans une image acquise par ladite caméra et en réduisant au maximum la nécessité de réaliser des relevés topographiques.

Il est à cet effet proposé, selon un premier aspect, un procédé de détermination par un module de traitement de paramètres d'alignement d'une caméra par rapport à une route à partir d'une image préalablement acquise par ladite caméra et d'un modèle de route rectiligne, l'image montrant un premier bord d'une route et un deuxième bord de la route opposé au premier bord, le modèle de route rectiligne étant défini dans un repère route par un premier point, un deuxième point, un troisième point et un quatrième point, le premier point et le troisième point définissant une première limite d'un premier coté de route, le deuxième point et le quatrième point définissant une deuxième limite d'un deuxième côté de route opposé et parallèle au premier côté de route, le premier point et le deuxième point définissant une ligne de référence perpendiculaire à la route, et le troisième point et le quatrième point définissant une ligne parallèle à la ligne de référence, le procédé comprenant des étapes de :

- sélection, de pixels dans l'image, les pixels sélectionnés comprenant plusieurs pixels se trouvant sur le premier bord et plusieurs autres pixels sur le deuxième bord,

- à partir des pixels sélectionnés, détermination par le module de traitement dans le plan de l'image d'une première courbe paramétrique longeant le premier bord et caractérisée par une première variable, et détermination d'une deuxième courbe paramétrique longeant le deuxième bord et caractérisée par une deuxième variable, chaque variable permettant de calculer en tout point de la courbe paramétrique correspondante une tangente à ladite courbe paramétrique,

- en projetant les premier, deuxième, troisième et quatrième points du modèle de route dans l'image, détermination par le module de traitement des paramètres d'alignement de la caméra en minimisant un score dépendant des distances suivantes :

  • une distance entre le projeté dans le plan de l'image du premier point ayant des coordonnées prédéfinies dans le repère route, et un point de la première courbe paramétrique défini par une valeur particulière de la première variable, dite première valeur,

  • une distance entre le projeté dans le plan de l'image du deuxième point ayant des coordonnées prédéfinies dans le repère route, et un point de la deuxième courbe paramétrique défini par une valeur particulière de la deuxième variable, dite deuxième valeur,

- une distance entre un point de fuite observé dans l'image formant une intersection entre une première tangente à la première courbe paramétrique en le premier point et une deuxième tangente à la deuxième courbe paramétrique en le deuxième point, et un point de fuite de référence formant une intersection entre le projeté dans le plan de l'image de la première limite du modèle route et le projeté dans le plan de l'image de la deuxième limite du modèle route.

La première valeur et la deuxième valeur font partie des paramètres d'alignement déterminés.

Le procédé selon le premier aspect peut également comprendre les caractéristiques optionnelles suivantes, prises seules ou en combinaison à chaque fois que cela est techniquement possible.

De préférence, le score dépend également d'au moins une distance parmi les distances suivantes :

- une distance entre une droite du plan de l'image passant par le point de la première courbe paramétrique défini par la première valeur et passant par le point de la deuxième courbe paramétrique défini par la deuxième valeur, et un point de fuite de référence formant une intersection entre le projeté dans le plan de l'image de la droite de référence du modèle route, et le projeté dans le plan de l'image de la ligne parallèle à la ligne de référence du repère route.

- une distance entre la première tangente et le projeté dans le plan de l'image du troisième point du modèle route,

- une distance entre la première tangente et le projeté dans le plan de l'image d'un cinquième point de la première limite du modèle route,

- une distance entre la deuxième tangente et le projeté dans le plan de l'image du quatrième point du modèle route,

- une distance entre la deuxième tangente et le projeté dans le plan de l'image d'un sixième point de la deuxième limite du modèle route.

De préférence, le troisième point et le quatrième point définissent une première ligne parallèle à la ligne de référence, le modèle de route rectiligne étant défini en outre par un cinquième point localisé sur la première limite et un sixième point localisé sur la deuxième limite, et le cinquième point et le sixième point définissent une deuxième ligne parallèle à la ligne de référence, la première et la deuxième ligne parallèles étant localisées de part et d'autre de la ligne de référence.

De préférence, le score dépend également d'au moins une distance une distance entre une droite du plan de l'image passant par le point de la première courbe paramétrique défini par la première valeur et passant par le point de la deuxième courbe paramétrique défini par la deuxième valeur, et un point de fuite de référence formant une intersection entre le projeté dans le plan de l'image de la première ligne parallèle et de la deuxième ligne parallèle à la ligne de référence du repère route.

De préférence, le score dépend d'une somme de termes, chaque terme étant proportionnel au cube d'une des distances.

De préférence, au moins une parmi la première courbe paramétrique et la deuxième courbe paramétrique est une B-spline, très préférentiellement une B-spline d'ordre 3.

De préférence, le procédé selon le premier aspect comprend une étape de lissage polynômial d'au moins une parmi la première courbe paramétrique et la deuxième courbe paramétrique, le lissage étant mis en oeuvre avant le calcul du modèle de la route.

De préférence, les paramètres d'alignement de la caméra comprennent au moins un des paramètres suivants : un angle d'élévation de la caméra par rapport à la route, un angle de tangage de la caméra par rapport à la route, un azimut déterminé à partir de la première valeur , de la deuxième valeur et du point de fuite intersection des tangentes, une altitude d'acquisition de l'image par rapport à la route, une largeur de la route, une distance au sol entre la route et la caméra ayant acquis l'image.

De préférence, la minimisation du score s'effectue sur un domaine discret de la première valeur, la deuxième valeur, l'angle d'élévation, l'angle de tangage, la distance au sol entre la route et la caméra, l'altitude d'acquisition, la largeur de la route.

Il est également proposé, selon un deuxième aspect, une mémoire lisible par ordinateur stockant des instructions exécutables par l'ordinateur pour l'exécution des étapes du procédé selon le premier aspect.

Il est également proposé, selon un troisième aspect, un système de contrôle routier comprenant : une caméra configurée pour acquérir une image montrant un premier bord d'une route et un deuxième bord de la route opposé au premier bord, un capteur, tel qu'un radar Doppler ou un lidar, configuré pour acquérir de données relatives à la trajectoire suivie par une véhicule roulant sur la route, le capteur étant fixe par rapport à la caméra, et un module de traitement configuré pour déterminer des paramètres d'alignement de la caméra par rapport à la route au moyen du procédé selon le premier aspect.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique un système de contrôle routier selon un mode de réalisation.

La figure 2 est un organigramme d'étapes d'un procédé selon un mode de réalisation.

Les figures 3, 4, 5b, et 6 sont des exemples d'images acquises au cours du procédé de la figure 2, dans lesquels sont mises en surbrillances certains points, droites et courbes.

La figure 5a illustre un repère route.

Sur l'ensemble des figures, les éléments similaires portent des références identiques.

## DESCRIPTION DETAILLEE DE L'INVENTION

**1)** Système de contrôle routier

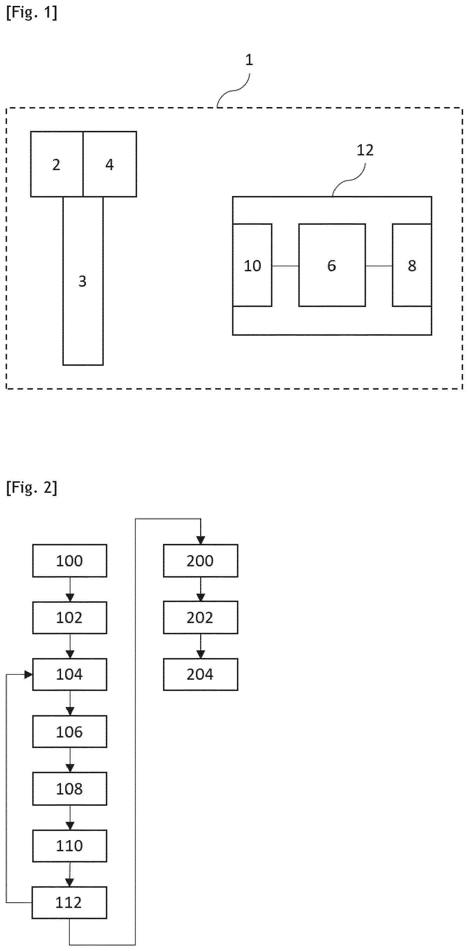

En référence à la figure 1, un système de contrôle routier 1 comprend une caméra 2, un ou plusieurs capteur(s) de mouvement 4, et un module de traitement 6.

La caméra 2 est capable d'acquérir une image montrant un premier bord d'une route et un deuxième bord de la route opposé au premier bord.

Dans le présent document, le terme « caméra » est à interpréter au sens large et couvre n'importe quel dispositif d'acquisition d'image ; en particulier, le terme « caméra » couvre mais n'est pas limité à un dispositif d'acquisition de vidéos (autrement dit, des séquences d'images).

Le système 1 comprend un support 3 destiné à être posé ou fixé au sol, la caméra 2 étant montée sur le support 3. La caméra 2 peut être fixe par rapport au support 3, ou bien mobile par rapport au support 3, par exemple mobile en rotation autour d'un axe, de préférence plusieurs axes (auquel cas la caméra 2 est reliée au support par une liaison rotule). Le support 3 est par exemple un trépied.

De manière générale, le capteur de mouvement 4 est configuré pour acquérir des données relatives à la trajectoire suivie par une cible mobile, telle qu'un véhicule roulant sur une route.

Le capteur de mouvement 4 peut être un radar Doppler. Les données relatives à la trajectoire d'une cible comprennent dans ce cas une vitesse radiale, c'est-à-dire une vitesse mesurée le long d'un axe de visée séparant le radar Doppler de la cible. Une vitesse d'une cible, telle qu'un véhicule, peut être déduite d'un angle d'azimut existant entre l'axe du radar et le vecteur vitesse de la cible correspondant à la position de cette cible.

Alternativement, le capteur de mouvement 4 peut être un lidar.

Le système 1 comprend par ailleurs un écran d'affichage 8, susceptible d'afficher des images acquises par la caméra 2.

Le système 1 comprend par ailleurs une interface d'entrée 10 permettant à un utilisateur de sélectionner des pixels affichés par l'écran d'affichage 8. L'interface d'entrée 10 comprend de préférence un écran tactile couplé à l'écran d'affichage 8, permettant à un utilisateur de réaliser une telle sélection en touchant des zones de l'écran tactile coïncidant avec des zones de l'écran d'affichage 8. En variante ou en complément, l'interface d'entrée 10 comprend une souris et/ou un claver.

L'interface d'entrée 10 peut également être configurée pour permettre la saisie de valeurs de paramètres par un utilisateur.

Dans un mode de réalisation, l'écran d'affichage 8 et l'interface d'entrée 10 font partie d'un terminal utilisateur 12 portatif indépendant de la caméra 2. Le terminal 12 prend par exemple la forme d'une tablette, d'un ordinateur portable ou bien d'un smartphone.

Le module de traitement 6 est, de manière générale, configuré pour mettre en oeuvre un procédé de traitement sur la base d'une image acquise par la caméra 2, traitement qui sera décrit dans la suite du présent document. Ce procédé de traitement a pour objectif de déterminer des paramètres d'alignement de la caméra par rapport à une route.

Le module de traitement 6 comprend au moins une mémoire stockant les instructions de code d'un programme d'ordinateur, et au moins un processeur pour exécuter ce programme d'ordinateur, entraînant ainsi la mise en oeuvre de ce procédé de traitement.

La position du module de traitement 6 dans le système 1 est quelconque. Le module de traitement 6 peut ainsi être un composant :

- inclus dans le terminal 12 (comme représenté sur la figure 1), ou
- fixé à la caméra 2 ou au support 3,
- inclus dans un serveur distant communiquant avec la caméra 2 et l'écran d'affichage 8 par l'intermédiaire d'un réseau de communication quelconque.

Alternativement, le module de traitement 6 comprend plusieurs unités de traitements à distance les unes les autres, communiquant entre elles, et mettant en oeuvre différentes étapes du procédé de traitement. Ces unités de traitements peuvent se répartir entre les trois emplacements précités. On comprend ainsi que les étapes du procédé qui va être décrit ci-après ne sont pas nécessairement mises en oeuvre au même endroit.

2) Modèle de route

Sont mémorisées dans la mémoire du module de traitement 6 des données représentatives d'un modèle d'une route. Ce modèle fait l'hypothèse que la route est rectiligne, c'est-à-dire que la route modélisée présente deux bords opposés rectilignes et parallèles.

Soit un repère lié à la route (O, x, y, z). Le repère est orthonormé direct et tel que :

- l'axe [Ox) est tangent à l'un des deux bords de la route,
- l'axe [Oy) est compris dans le plan de la route,
- l'axe [Oz) est orthogonal au plan de la route,
- le point O est tel que la caméra a une position au sol de coordonnées $(-L1, d)$, où $L1$ est une constante prédéfinie, par exemple 28 mètres.

Le modèle de route est défini par une pluralité de points U1, U2, V1, V2, W1 et W2 ayant des coordonnées exprimées dans le repère lié à la route. Ces coordonnées sont les suivantes :

- U1 : $(-l\_Taille, 0, 0)$
- V1 : $(0, 0, 0)$
- W1 : $(l\_Taille, 0, 0)$
- U2 : $(-l\_Taille, -L, 0)$
- V2 : $(0, -L, 0)$
- W2 : $(l\_Taille, -L, 0)$

où $l\_Taille$ est une constante prédéfinie, par exemple égale à 10 mètres et $L$ correspond à la largeur de la route.

Ainsi : le point V1 et le point U1 définissent une première limite d'un premier coté de route et correspondant à une ligne d'abscisse nulle du repère route ; le point V2 et le point U2 définissent une deuxième limite d'un deuxième côté de route opposé et parallèle au premier côté de route ; les points V1 et V2 définissent une ligne de référence correspondant à une ligne d'ordonnée nulle du repère route perpendiculaire à la route ; et les point U1 et U2 définissant une ligne parallèle à la ligne de référence.

Le point V1 est localisé en l'origine du repère.

Ce choix de repère route est un exemple. L'origine du repère, le positionnement de l'axe des abscisses et des ordonnées et/ou leur direction peut être choisis différemment.

Le modèle de route est par ailleurs défini par une rotation et une translation.

3) Procédé d'alignement

Le système 1 peut typiquement être utilisé pour le contrôle du respect du code de la route, par exemple par des représentants de forces de l'ordre (policiers, gendarmes, etc.).

Dans ce qui suit, est détaillé un procédé mis en oeuvre par le système 1 dans cette application particulière, tout en notant que d'autres applications du système peuvent être envisagées.

Un utilisateur du système 1 est posté à proximité du bord d'une route. La route comprend un premier bord et un deuxième bord opposé au premier bord. La route comprend une ou plusieurs voies de circulation entre le premier bord et le deuxième bord. Chacun du premier bord et du deuxième bord longe une voie de circulation.

L'utilisateur positionne le support sur le sol à côté de la route, par exemple à quelques mètres de la route. La caméra 2 est orientée pour pouvoir observer la route (plus précisément une portion de cette route). Il est en particulier fait en sorte que le premier bord et le deuxième bord de la route soient tous dans le champ de vision de la caméra 2.

Le procédé comprend une phase préliminaire durant laquelle la position et l'orientation de la caméra 2 par rapport à la route sont déterminées.

En référence à la figure 2, cette phase préliminaire comprend les étapes suivantes.

Dans une étape d'acquisition 100, une image est acquise par la caméra 2. Du fait de son orientation et de sa position par rapport à la route, l'image acquise montre le premier bord et le deuxième bord de la route.

Dans une étape 102, le module de traitement 6 commande l'affichage de l'image sur l'écran d'affichage 8.

Dans une étape de sélection 104, des pixels de l'image situés sur le premier bord et sur le deuxième bord tels que représentés dans cette image sont sélectionnés.

Dans un mode de réalisation manuel de l'étape 104, une telle sélection est réalisée par l'utilisateur au moyen de l'interface d'entrée 10. Par exemple, l'utilisateur peut toucher différentes zones de l'écran tactile ; un pixel de l'image affichée correspondant à chaque zone touchée est identifié par le module de traitement 6, ce pixel étant par exemple aligné avec le centre de la zone touchée.

Dans un mode de réalisation automatique de l'étape 104, la sélection de pixels est réalisée de manière automatique par le module de traitement 6, au moyen d'un outil de reconnaissance de forme ou de contour adapté pour détecter le premier bord et le deuxième bord dans l'image.

Le module de traitement 6 peut commander l'affichage de marqueurs permettant de mettre en évidence les pixels sélectionnées dans le mode de réalisation manuel ou le mode de réalisation automatique.

Dans un mode de réalisation semi-automatique de l'étape 104, les deux principes qui précèdent sont combinés : le module de traitement 6 peut commander un affichage de marqueurs mettant en surbrillance des pixels ayant sélectionnés à l'aide de l'outil de reconnaissance de forme ou de contour, de sorte que ces pixels soient localisables par l'utilisateur, et peut offrir la possibilité à l'utilisateur d'ajuster les positions de ces pixels, par exemple par une opération de glisser-déposer. Une telle possibilité est avantageuse, car l'outil de reconnaissance de bords d'image peut fonctionner imparfaitement dans certaines conditions (par exemple en présence d'ombrages causées par de la végétation à proximité de la route).

De préférence, N pixels situés sur le premier bord et N pixels situés sur le premier bord sont sélectionnés à l'étape 102, avec N>1, par exemple N=6.

Les coordonnées des pixels sélectionnés dans le plan de l'image sont transmises au module de traitement 6 et sont mémorisés dans la mémoire.

Dans une étape 106, le module de traitement 6 détermine, à partir des pixels sélectionnés, une première courbe paramétrique et une deuxième courbe paramétrique dans le plan de l'image qui longent respectivement le premier bord et le deuxième bord de la route.

La première courbe paramétrique courbe_1 peut être une première B-spline. Une telle B-spline est définie par des paramètres appelés dans la littérature « points de contrôle », et par une variable $t1$ de valeur comprise entre 0 et 1, chaque valeur de la variable étant associée à un point de la première B-spline.

Similairement, la deuxième courbe paramétrique courbe_2 peut être une deuxième B-spline. Une telle B-spline est définie par d'autres points de contrôle, et par une autre variable $t2$ de valeur comprise entre 0 et 1, chaque valeur de cette autre variable étant associée à un point de la deuxième B-spline.

L'utilisation d'une ou deux B-splines est avantageuse au cours du procédé, car il est aisé de calculer une tangente à une telle courbe en n'importe lequel de ses points (ce qui est réalisé ultérieurement dans le procédé).

Dans un mode de réalisation particulier, la ou chaque B-spline utilisée est d'ordre 3, et N=6.

Une B-spline calculée à l'étape 106 peut être sujette à un phénomène d'ondelettes (ou « snake » en anglais). Pour corriger ce phénomène, une étape optionnelle de lissage 108 peut être mise en oeuvre, durant laquelle le module de traitement 6 applique un lissage polynomial (« polynomial smoothing » en anglais) à la ou chaque B-spline déterminée.

Les paramètres définissant les deux courbes paramétriques (le cas échéant lissées à l'issue de l'étape de lissage 108) sont mémorisés dans la mémoire.

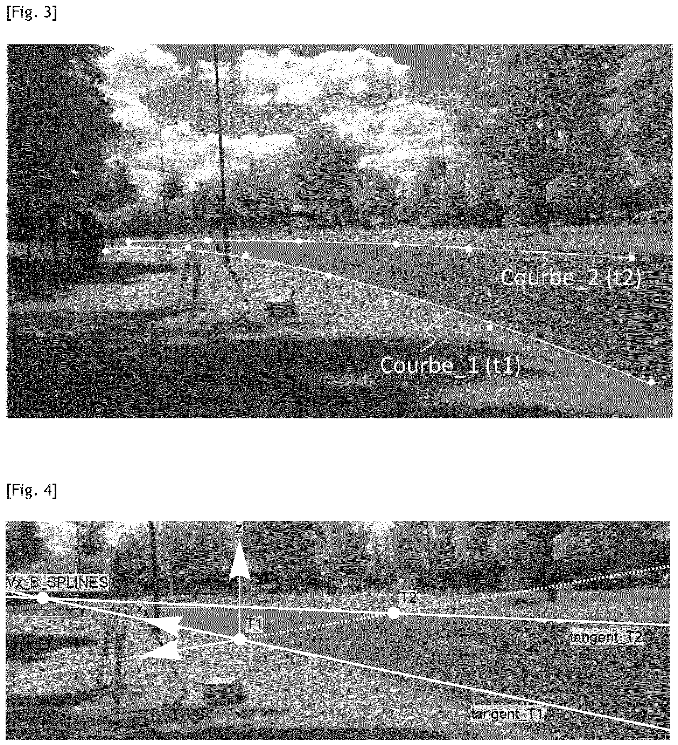

A titre d'illustration, la figure 3 montre un exemple d'image acquise lors de l'étape 100, et sur laquelle ont été tracées deux exemples de courbes paramétriques courbe_1, courbe_2 construites à partir de pixels sélectionnés. Les courbes paramétriques courbe_1, courbe_2 sont définies par des variables $t1$, $t2$.

A titre d'illustration, la figure 4 montre un exemple d'image acquise lors de l'étape 100, et sur laquelle ont été tracées les tangentes, nommées tangente_T1 et tangente_T2, considérées aux points T1 et T2. Ces points T1 et T2 sont des points appartenant respectivement aux courbes paramétriques courbe_1 et courbe_2 et définis par des valeurs particulières des variables $t1$ et $t2$, dites respectivement première valeur $t11$ et deuxième valeur $t21$.

Une des propriétés du repère lié à la route est que l'axe [Ox) doit est confondu avec la droite tangente_T1 et que l'axe [Oy) doit être confondu avec la droite (T1 T2).

On définit Vx_B_SPLINES le point de fuite des tangentes tangente_T1 et tangente_T2. On suppose que la matrice de calibration de la caméra est connue.

Dans une étape 110, le module de traitement 6 calcule un modèle de la route adapté pour représenter une route rectiligne dans l'image à partir d'une définition de cette route dans le repère lié à la route.

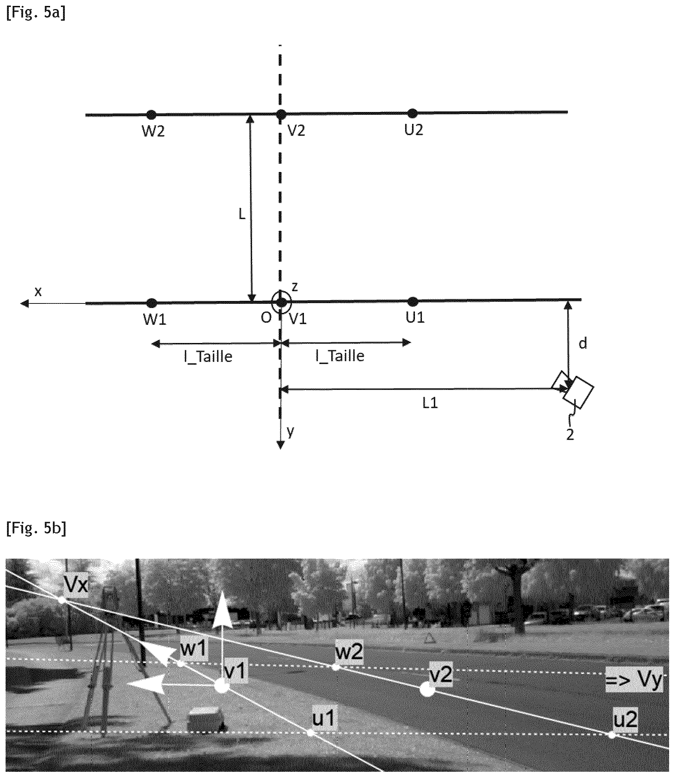

Dans un mode de réalisation correspondant à la figure 5a,

- la caméra a pour coordonnées {-L1, d, h} dans ce repère lié à la route
  où L1 est une constante prédéfinie, par exemple égale à 28 mètres. Le signe de d dépend du lieu d'implantation de la caméra 2 : accotement, terre-plein central et du sens de visée.

- les angles d'Euler caractérisant la rotation sont les suivants : {azimut + Pi/2, élévation + Pi/2, roll}.

Un enjeu est de trouver les paramètres d'alignement de la caméra 2 à partir d'une image acquise par ladite caméra 2.

Les paramètres d'alignement de la caméra 2 comprennent au moins un des paramètres suivants :

   a. un angle d'élévation de la caméra 2 par rapport à la route,
   b. un angle de tangage de la caméra 2 par rapport à la route,
   c. un azimut déterminé à partir de la première valeur t11, de la deuxième valeur t21 et du point de fuite intersection des tangentes tangent_T1, tangent_T2,
   d. une altitude d'acquisition de l'image par rapport à la route,
   e. une largeur de la route L,
   f. une distance d au sol entre la route et la caméra 2 ayant acquis l'image.

Déterminer les première et deuxième valeurs t11, t21 pour les variables t1 et t2 permet de calculer l'azimut. C'est la raison pour laquelle dans la suite de la description, nous cherchons à déterminer les paramètres de première et deuxième valeurs t11, t21 pour que puisse être déterminé le paramètre d'alignement d'azimut.

On définit :

- u1 le projeté de U1 dans l'image
- u2 le projeté de U2 dans l'image
- v1 le projeté de V1 dans l'image
- v2 le projeté de V2 dans l'image
- w1 le projeté de W1 dans l'image
- w2 le projeté de W2 dans l'image
- Vx le point de fuite défini par l'intersection des droites (u1w1) et (u2w2)
- Vy le point de fuite défini par l'intersection des droites (u1u2) et (w1w2)

A titre d'illustration, la figure 5a représente le modèle de la route et la figure 5b représente le projeté de ce modèle de la route dans une l'image acquise par la caméra 2 pour un jeu de paramètres donné {d, h, t11, t21, élévation, roll, L}. Sur la figure 5b, la flèche pointant vers la droite signifie que le point de fuite Vy est situé hors de l'image.

Dans une première variante, les paramètres précités sont inconnus. Concrètement, l'unité de traitement 6 fait la supposition que chaque paramètre inconnu du modèle de route est compris dans un intervalle prédéfini. La combinaison de ces intervalles couvre ainsi un ensemble de modèle de route candidats.

Pour chaque modèle de route candidat (défini par un septuplet de valeurs candidates pour les paramètres constituant des inconnues), le module de traitement 6 calcule un score S associé à ce modèle de route candidat. Le calcul de tous les scores possibles peut en pratique être implémenté sous la forme d'un programme d'ordinateur comprenant 7 boucles imbriquées les unes dans les autres.

Le module de route déterminé à l'étape 110 est le modèle de route candidat qui est associé au score de valeur minimale parmi tous les scores calculés.

On va maintenant détailler comment le score S associé à un modèle de route candidat est calculé à l'étape 110. Le score dépend de certaines distances di mesurées dans le plan de l'image.

Ces distances di sont définies ci-dessous. L'unité des distances est le pixel.

- d1 : distance entre u1 et T1
- d2 : distance entre v2 et T2
- d3 : distance entre les points de fuite Vx_P_SPLINES et Vx
- d4 : distance entre le point de fuite Vy et la droite (T1 T2)

- d5 : distance entre le point u1 et la droite tangente_T1
- d6 : distance entre le point w1 et la droite tangente_T1
- d7 : distance entre le point u2 et la droite tangente_T2
- d8 : distance entre point w2 et la droite tangente_T2

Parmi les distances d1 à d8 définies ci-dessus, les distances d4 à d8 sont facultatives. Autrement dit, le score S pourrait ne dépendre que des distances d1, d2 et d3. Néanmoins, leur prise en compte dans le score S a pour avantage de conduire à la détermination d'un modèle de route qui a plus de chances d'être fiable.

De manière générale, le score S peut dépendre d'une somme de termes, chaque terme de la somme étant fonction d'une des distances di définies plus haut.

Dans un mode particulièrement avantageux, chaque terme est proportionnel au cube d'une des distances di. On peut ainsi poser :

$$S = \sum_{i=1}^{k} (d_i)^3$$

ou bien:

$$S = \sqrt[3]{\sum_{i=1}^{K} (d_i)^3}$$

où k est un entier égal à 3, 4, 5, 6, 7 ou 8.

L'inventeur a constaté que la mise au cube des distances di pour le calcul du score S améliore le résultat d'alignement comparativement à des scores qui dépendraient de la somme des distances di, ou même de la somme des carrés de ces distances di.

Comme indiqué précédemment, le modèle de route déterminé à l'étape 110 est le modèle de route candidat associé au score S de valeur minimale, parmi tous les scores calculés.

Dans la première variante discutée jusqu'ici, les paramètres h, L, d, t1, t2, elevation, et roll sont des paramètres inconnus dont on sait seulement que leurs valeurs respectives sont comprises dans des intervalles prédéfinis.

Le tableau ci-dessous illustre un domaine de recherche prédéterminé et discrétisé pour les paramètres inconnus ci-dessus mentionnées (les intervalles de recherche et le pas de recherche). Ce domaine couvre 300000 combinaisons de paramètres, soit autant de modèles de route candidats.

| | t11 | t21 | elevation | roll | drive | h | L |
|---|---|---|---|---|---|---|---|
| Centre d'intervalle | 0.4 | 0.6 | 0 | 0 | 3 | 1.6 | 3.5 |
| Demi intervalle | 0.1 | 0.1 | 5 | 5 | 5 | 0 | 0.2 |
| Nombre de valeurs par demi intervalle | 5 | 5 | 20 | 10 | 10 | 1 | 3 |
| Pas | 0.02 | 0.02 | 0.25 | 0.5 | 0.5 | 0 | 0.07 |

Dans une deuxième variante, certains de ces paramètres sont prédéterminés, c'est-à-dire que leur valeur est connue avant la mise en oeuvre de l'étape 110, et les autres paramètres sont inconnus. Un avantage de cette deuxième variante est son temps de calcul plus court, car le nombre de modèles candidats est réduit (ce qui se traduit en pratique par un nombre de boucles de calcul imbriquées réduit). En contrepartie, il faut avoir été capable de déterminer à l'avance certains paramètres.

Le ou chaque paramètre prédéterminé peut-être fourni par l'utilisateur au moyen de l'interface d'entrée.

En particulier, les paramètres h, L et d sont des longueurs qui peuvent être mesurées par l'utilisateur avec un outil de mesure tel qu'un décamètre.

La mesure de l'altitude h est facile à réaliser et ne pose aucun problème de sécurité même si celle-ci est variable puisque cette mesure peut être réalisée à distance de la route. En revanche, la mesure des longueurs L et d est plus délicate puisque l'utilisateur doit pour les mesurer se rapprocher et même traverser la route.

C'est pourquoi, dans une variante préférée offrant un bon compromis entre durée d'exécution et sécurité, seul le paramètre h est mesuré par l'utilisateur avant l'étape de détermination 110, et le module de traitement 6 traite les autres paramètres précités, y compris L et d, comme des inconnues au cours de l'étape 110.

Après l'étape 110, le module de traitement 6 peut réaliser dans une étape 112 une comparaison entre le score S minimal associé au modèle de route déterminé et un seuil prédéfini. Si cette valeur minimale du score est inférieure au seuil prédéfini, le modèle de route déterminé est considéré acceptable. Si en revanche cette valeur minimale du score est supérieure au seuil prédéfini, le modèle de route déterminé n'est pas considéré suffisamment fiable. Dans ce cas, le procédé retourne à l'étape de sélection 102.

Le seuil est par exemple de 50 pixels.

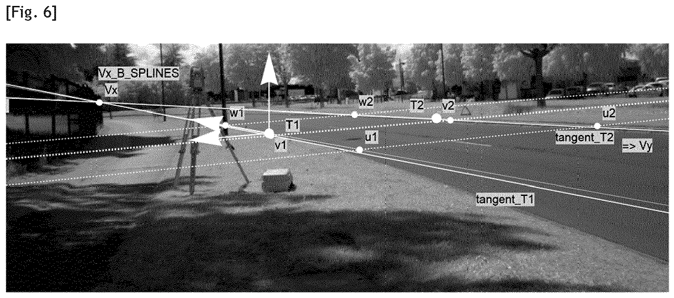

Une fois qu'il a été déterminé un modèle de route fiable par le module de traitement 6, le procédé d'alignement est terminé. La figure 6 illustre un résultat possible de ce procédé. La caméra peut être utilisée pour l'application des contrôles routiers. Ce résultat a été obtenu après un temps de calcul de 90 secondes, avec un score égal à 25 pixels.

**Revendications**

1. Procédé de détermination par un module de traitement de paramètres d'alignement d'une caméra (2) par rapport à une route à partir d'une image préalablement acquise par ladite caméra (2) et d'un modèle de route rectiligne, l'image montrant un premier bord d'une route et un deuxième bord de la route opposé au premier bord, le modèle de route rectiligne étant défini dans un repère route par un premier point (V1), un deuxième point (V2), un troisième point (U1) et un quatrième point (U2), le premier point (V1) et le troisième point (U1) définissant une première limite d'un premier coté de route, le deuxième point (V2) et le quatrième point (U2) définissant une deuxième limite d'un deuxième côté de route opposé et parallèle au premier côté de route, le premier point (V1) et le deuxième point (V2) définissant une ligne de référence perpendiculaire à la route, et le troisième point (U1) et le quatrième point (U2) définissant une ligne parallèle à la ligne de référence, le procédé comprenant des étapes de :

   - sélection (104), de pixels dans l'image, les pixels sélectionnés comprenant plusieurs pixels se trouvant sur le premier bord et plusieurs autres pixels sur le deuxième bord,
   - à partir des pixels sélectionnés, détermination (106) par le module de traitement dans le plan de l'image d'une première courbe paramétrique longeant le premier bord et **caractérisée par** une première variable (t1), et détermination d'une deuxième courbe paramétrique longeant le deuxième bord et **caractérisée par** une deuxième variable (t2), chaque variable (t1, t2) permettant de calculer en tout point de la courbe paramétrique correspondante une tangente à ladite courbe paramétrique,
   - en projetant les premier, deuxième, troisième et quatrième points (V1, V2, U1, U2) du modèle de route dans l'image, détermination par le module de traitement des paramètres d'alignement de la caméra, dans lequel les paramètres d'alignement déterminés comprennent une valeur particulière de la première variable (t1), dite première valeur (t11), et une valeur particulière de la deuxième variable (t2), dite deuxième valeur (t21), et minimisent un score dépendant des distances suivantes :

      • une distance entre

         • le projeté dans le plan de l'image du premier point (V1) ayant des coordonnées prédéfinies dans le repère route, et
         • un point (T1) de la première courbe paramétrique défini par la première valeur (t11),

      • une distance entre

         • le projeté dans le plan de l'image du deuxième point (V2) ayant des coordonnées prédéfinies dans le repère route, et
         • un point (T2) de la deuxième courbe paramétrique défini par la deuxième valeur,

      • une distance entre

         • un point de fuite observé dans l'image (Vx_B_SPLINE) formant une intersection entre une première tangente (tangent_T1) à la première courbe paramétrique en le premier point (T1) et une deuxième tangente (tangent_T2) à la deuxième courbe paramétrique en le deuxième point (T2), et
         • un point de fuite de référence (Vx) formant une intersection entre

• le projeté dans le plan de l'image de la première limite du modèle route, et
• le projeté dans le plan de l'image de la deuxième limite du modèle route.

2. Procédé selon la revendication 1, dans lequel le troisième point (U1) et le quatrième point (U2) définissent une première ligne parallèle à la ligne de référence, le modèle de route rectiligne est défini en outre par un cinquième point (W1) localisé sur la première limite et un sixième point (W2) localisé sur la deuxième limite, le cinquième point (W1) et le sixième point (W2) définissent une deuxième ligne parallèle à la ligne de référence, la première et la deuxième lignes parallèles étant localisées de part et d'autre de la ligne de référence, et dans lequel le score dépend également d'au moins une distance parmi les distances suivantes :

  • une distance entre

    • une droite du plan de l'image passant par le point (T1) de la première courbe paramétrique défini par la première valeur (t11) et passant par le point (T2) de la deuxième courbe paramétrique défini par la deuxième valeur,
    • un point de fuite de référence (Vy) formant une intersection entre

      • le projeté dans le plan de l'image de la droite de référence du modèle route, et
      • le projeté dans le plan de l'image de la ligne parallèle à la ligne de référence du repère route.

  • une distance entre la première tangente (tangent_T1) et le projeté dans le plan de l'image du troisième point (U1) du modèle route,
  • une distance entre la première tangente (tangent_T1) et le projeté dans le plan de l'image d'un cinquième point (W1) de la première limite du modèle route,
  • une distance entre la deuxième tangente (tangent_T2) et le projeté dans le plan de l'image du quatrième point (U2) du modèle route,
  • une distance entre la deuxième tangente (tangent_T2) et le projeté dans le plan de l'image d'un sixième point (W2) de la deuxième limite du modèle route.

3. Procédé selon l'une des revendications précédentes, dans lequel le troisième point (U1) et le quatrième point (U2) définissant une première ligne parallèle à la ligne de référence, le modèle de route rectiligne étant défini en outre par un cinquième point (W1) localisé sur la première limite et un sixième point (W2) localisé sur la deuxième limite, le cinquième point (W1) et le sixième point (W2) définissant une deuxième ligne parallèle à la ligne de référence, la première et la deuxième lignes parallèles étant localisées de part et d'autre de la ligne de référence, le score dépendant également d'au moins une distance une distance entre

    • une droite du plan de l'image passant par le point (T1) de la première courbe paramétrique défini par la première valeur (t11) et passant par le point (T2) de la deuxième courbe paramétrique défini par la deuxième valeur (121),
    • un point de fuite de référence (Vy) formant une intersection entre le projeté dans le plan de l'image de la première ligne parallèle et de la deuxième ligne parallèle à la ligne de référence du repère route.

4. Procédé selon l'une des revendications précédentes, dans lequel le score dépend d'une somme de termes, chaque terme étant proportionnel au cube d'une des distances.

5. Procédé selon l'une des revendications précédentes, dans lequel au moins une parmi la première courbe paramétrique et la deuxième courbe paramétrique est une B-spline, de préférence une B-spline d'ordre 3.

6. Procédé selon l'une des revendications précédentes, comprenant une étape de lissage polynômial (108) d'au moins une parmi la première courbe paramétrique et la deuxième courbe paramétrique, mis en oeuvre avant le calcul du modèle de la route (110).

7. Procédé selon l'une des revendications précédentes, dans lequel les paramètres d'alignement de la caméra comprennent au moins un des paramètres suivants :

  • un angle d'élévation de la caméra (2) par rapport à la route,
  • un angle de tangage de la caméra (2) par rapport à la route,
  • un azimut déterminé à partir de la première valeur (t11), de la deuxième valeur et du point de fuite intersection des tangentes (tangent_T1, tangent_T2),
• une altitude d'acquisition de l'image par rapport à la route,
• une largeur de la route (L),
• une distance (d) au sol entre la route et la caméra (2) ayant acquis l'image.

8. Procédé selon la revendication précédente, dans lequel la minimisation du score s'effectue sur un domaine discret de la première valeur (t11), de la deuxième valeur (t21), de l'angle d'élévation, de l'angle de tangage, de la distance (d) au sol entre la route et la caméra (2), de l'altitude d'acquisition, et de la largeur de la route (L).

9. Mémoire lisible par ordinateur stockant des instructions exécutables par l'ordinateur pour l'exécution des étapes du procédé selon l'une des revendications 1 à 8.

10. Système de contrôle routier (1) comprenant :

• une caméra (2) configurée pour acquérir une image montrant un premier bord d'une route et un deuxième bord de la route opposé au premier bord,
• un capteur (4), tel qu'un radar Doppler ou un lidar, configuré pour acquérir de données relatives à la trajectoire suivie par une véhicule roulant sur la route, le capteur étant fixe par rapport à la caméra (2),
• un module de traitement (6) configuré pour déterminer des paramètres d'alignement de la caméra (2) par rapport à la route au moyen du procédé selon l'une des revendications 1 à 8.

**Patentansprüche**

1. Verfahren zur Bestimmung, durch ein Verarbeitungsmodul, von Parametern zur Ausrichtung einer Kamera (2) im Verhältnis zu einer Straße anhand eines Bilds, das zuvor von der Kamera (2) erfasst wurde, und eines geradlinigen Straßenmodells, wobei das Bild einen ersten Rand einer Straße und einen zweiten Rand der Straße gegenüber dem ersten Rand zeigt, wobei das geradlinige Straßenmodell in einem Straßen-Koordinatensystem von einem ersten Punkt (V1), einem zweiten Punkt (V2), einem dritten Punkt (U1) und einem vierten Punkt (U2) definiert ist, wobei der erste Punkt (V1) und der dritte Punkt (U1) eine erste Begrenzung einer ersten Straßenseite definieren, wobei der zweite Punkt (V2) und der vierte Punkt (U2) eine zweite Begrenzung einer zweiten Straßenseite definieren, die gegenüber und parallel zur ersten Straßenseite verläuft, wobei der erste Punkt (V1) und der zweite Punkt (V2) eine Bezugslinie definieren, die senkrecht zur Straße verläuft, und der dritte Punkt (U1) und der vierte Punkt (U2) eine Linie definieren, die parallel zur Bezugslinie verläuft, wobei das Verfahren folgende Schritte umfasst:

- Auswählen (104) von Pixeln in dem Bild, wobei die ausgewählten Pixel mehrere Pixel, die sich auf dem ersten Rand befinden, und mehrere andere Pixel auf dem zweiten Rand umfassen,
- anhand der ausgewählten Pixel, Bestimmen (106), durch das Verarbeitungsmodul, in der Ebene des Bilds, einer ersten parametrischen Kurve, die den ersten Rand entlangläuft und durch eine erste Variable (t1) gekennzeichnet ist, und Bestimmen einer zweiten parametrischen Kurve, die den zweiten Rand entlangläuft und durch eine zweite Variable (t2) gekennzeichnet ist, wobei es jede Variable (t1, t2) ermöglicht, an jedem Punkt der entsprechenden parametrischen Kurve eine Tangente der parametrischen Kurve zu berechnen,
- durch Projektion des ersten, zweiten, dritten und vierten Punkts (V1, V2, U1, U2) des Straßenmodells in das Bild, Bestimmen der Ausrichtungsparameter der Kamera durch das Verarbeitungsmodul, wobei die bestimmten Ausrichtungsparameter einen bestimmten Wert der ersten Variablen (t1), erster Wert (t11) genannt, und einen bestimmten Wert der zweiten Variablen (t2), zweiter Wert (t21) genannt, umfassen und einen Score minimieren, der von den folgenden Abständen abhängig ist:

• einem Abstand zwischen
• der Projektion, in der Ebene des Bilds, des ersten Punkts (V1) mit vorgegebenen Koordinaten im Straßen-Koordinatensystem, und
• einem Punkt (T1) der ersten parametrischen Kurve, der vom ersten Wert (t11) definiert ist,
• einem Abstand zwischen
• der Projektion, in der Ebene des Bilds, des zweiten Punkts (V2) mit vorgegebenen Koordinaten im Straßen-Koordinatensystem, und
• einem Punkt (T2) der zweiten parametrischen Kurve, der vom zweiten Wert definiert ist,
• einem Abstand zwischen
• einem im Bild beobachteten Fluchtpunkt (Vx_B_SPLINE), der einen Schnittpunkt zwischen einer ersten Tangente (tangent_T1) der ersten parametrischen Kurve am ersten Punkt (T1) und einer zweiten Tangente (tangent_T2) der zweiten parametrischen Kurve am zweiten Punkt (T2) bildet, und
• einem Bezugsfluchtpunkt (Vx), der einen Schnittpunkt zwischen
• der Projektion, in der Ebene des Bilds, der ersten Begrenzung des Straßenmodells, und
• der Projektion, in der Ebene des Bilds, der zweiten Begrenzung des Straßenmodells bildet.

2. Verfahren nach Anspruch 1, wobei der dritte Punkt (U1) und der vierte Punkt (U2) eine erste Linie definieren, die parallel zur Bezugslinie verläuft, wobei das geradlinige Straßenmodell ferner von einem fünften Punkt (W1), der sich auf der ersten Begrenzung befindet, und einem sechsten Punkt (W2), der sich auf der zweiten Begrenzung befindet, definiert ist, wobei der fünfte Punkt (W1) und der sechste Punkt (W2) eine zweite Linie definieren, die parallel zur Bezugslinie verläuft, wobei sich die erste und zweite parallele Linie beiderseits der Bezugslinie befinden, und wobei der Score ebenfalls von wenigstens einem Abstand von den folgenden Abständen abhängig ist:

   • einem Abstand zwischen
   • einer Geraden der Ebene des Bilds, die durch den Punkt (T1) der ersten parametrischen Kurve verläuft, der vom ersten Wert (t11) definiert ist, und durch den Punkt (T2) der zweiten parametrischen Kurve verläuft, der vom zweiten Wert definiert ist,
   • einem Bezugsfluchtpunkt (Vy), der einen Schnittpunkt zwischen
   • der Projektion, in der Ebene des Bilds, der Bezugsgeraden des Straßenmodells, und
   • der Projektion, in der Ebene des Bilds, der Linie, die zu der Bezugslinie des Straßenmodells parallel verläuft, bildet,
   • einem Abstand zwischen der ersten Tangente (tangent_T1) und der Projektion, in der Ebene des Bilds, dritten Punkts (U1) des Straßenmodells,
   • einem Abstand zwischen der ersten Tangente (tangent_T1) und der Projektion, in der Ebene des Bilds, eines fünften Punkts (W1) der ersten Begrenzung des Straßenmodells,
   • einem Abstand zwischen der zweiten Tangente (tangent_T2) und der Projektion, in der Ebene des Bilds, des vierten Punkts (U2) des Straßenmodells,
   • einem Abstand zwischen der zweiten Tangente (tangent_T2) und der Projektion, in der Ebene des Bilds, eines sechsten Punkts (W2) der zweiten Begrenzung des Straßenmodells.

3. Verfahren nach einem der vorhergehenden Ansprüche, wobei der dritte Punkt (U1) und der vierte Punkt (U2) eine erste Linie definieren, die parallel zur Bezugslinie verläuft, wobei das geradlinige Straßenmodell ferner von einem fünften Punkt (W1), der sich auf der ersten Begrenzung befindet, und einem sechsten Punkt (W2), der sich auf der zweiten Begrenzung befindet, definiert ist, wobei der fünfte Punkt (W1) und der sechste Punkt (W2) eine zweite Linie definieren, die parallel zur Bezugslinie verläuft, wobei sich die erste und zweite parallele Linie beiderseits der Bezugslinie befinden, wobei der Score ebenfalls von wenigstens einem Abstand zwischen Folgendem abhängig ist

   • einer Geraden der Ebene des Bilds, die durch den Punkt (T1) der ersten parametrischen Kurve verläuft, der vom ersten Wert (t11) definiert ist, und durch den Punkt (T2) der zweiten parametrischen Kurve verläuft, der vom zweiten Wert (t21) definiert ist,
   • einem Bezugsfluchtpunkt (Vy), der einen Schnittpunkt zwischen der Projektion, in der Ebene des Bilds, der ersten parallelen Linie und der zweiten Linie, die parallel zur Bezugslinie des Straßenmodells verläuft, bildet.

4. Verfahren nach einem der vorhergehenden Ansprüche, wobei der Score von einer Summe von Termen abhängig ist, wobei jeder Term zum Kubik einer der Abstände proportional ist.

5. Verfahren nach einem der vorhergehenden Ansprüche, wobei wenigstens eine von der ersten parametrischen Kurve und der zweiten parametrischen Kurve ein B-Spline ist, vorzugsweise ein B-Spline der Ordnung 3.

6. Verfahren nach einem der vorhergehenden Ansprüche, umfassend einen Schritt des polynomialen Glättens (108) wenigstens einer von der ersten parametrischen Kurve und der zweiten parametrischen Kurve, der vor der Berechnung des Modells der Straße (110) durchgeführt wird.

7. Verfahren nach einem der vorhergehenden Ansprüche, wobei die Ausrichtungsparameter der Kamera wenigstens einen der folgenden Parameter umfassen:

   • einen Elevationswinkel der Kamera (2) im Verhältnis zur Straße,
   • einen Nickwinkel der Kamera (2) im Verhältnis zur Straße,

• einen Azimut, der anhand des ersten Werts (t11), des zweiten Werts und des Schneidungsfluchtpunkts der Tangenten (tangent_T1, tangent_T2) bestimmt wird,
• eine Erfassungshöhe des Bilds im Verhältnis zur Straße,
• eine Breite der Straße (L),
• einen Abstand (d) zum Boden zwischen der Straße und der Kamera (2), die das Bild erfasst hat.

8. Verfahren nach dem vorhergehenden Anspruch, wobei die Minimierung des Scores über einem diskreten Bereich des ersten Werts (t11), des zweiten Werts (t21), des Elevationswinkels, des Nickwinkels, des Abstands (d) zum Boden zwischen der Straße und der Kamera (2), der Erfassungshöhe und der Breite der Straße (L) erfolgt.

9. Computerlesbarer Speicher, der durch den Computer ausführbare Anweisungen für die Ausführung der Schritte des Verfahrens nach einem der Ansprüche 1 bis 8 speichert.

10. Verkehrskontrollsystem (1) umfassend:

• eine Kamera (2), die dazu ausgebildet ist, ein Bild zu erfassen, das einen ersten Rad einer Straße und einen zweiten Rand der Straße gegenüber dem ersten Rand zeigt,
• einen Sensor (4), wie etwa ein Doppler-Radar oder ein Lidar, das dazu ausgebildet ist, Daten in Bezug auf die Bewegungsbahn zu erfassen, der ein Fahrzeug folgt, das auf der Straße fährt, wobei der Sensor im Verhältnis zur Kamera (2) fest ist,
• ein Verarbeitungsmodul (6), das dazu ausgebildet ist, Parameter zur Ausrichtung der Kamera (2) im Verhältnis zur Straße mittels des Verfahrens nach einem der Ansprüche 1 bis 8 zu bestimmen.

**Claims**

1. Method for determining, by way of a processing module, alignment parameters of a camera (2) with respect to a road based on an image acquired beforehand by said camera (2) and on a rectilinear road model, the image showing a first edge of a road and a second edge of the road opposite the first edge, the rectilinear road model being defined in a road coordinate system by a first point (V1), a second point (V2), a third point (U1) and a fourth point (U2), the first point (V1) and the third point (U1) defining a first boundary of a first side of the road, the second point (V2) and the fourth point (U2) defining a second boundary of a second side of the road opposite and parallel to the first side of the road, the first point (V1) and the second point (V2) defining a reference line perpendicular to the road, and the third point (U1) and the fourth point (U2) defining a line parallel to the reference line, the method comprising the following steps:

- selecting (104) pixels in the image, the selected pixels comprising multiple pixels located on the first edge and multiple other pixels on the second edge,
- based on the selected pixels, the processing module determining (106), in the plane of the image, a first parametric curve following the first edge and **characterized by** a first variable (t1), and determining a second parametric curve following the second edge and **characterized by** a second variable (t2), each variable (t1, t2) making it possible to compute, at any point of the corresponding parametric curve, a tangent to said parametric curve,
- by projecting the first, second, third and fourth points (V1, V2, U1, U2) of the road model into the image, the processing module determining alignment parameters of the camera, wherein the determined alignment parameters comprise a specific value of the first variable (11), referred to as first value (111), and a specific value of the second variable (t2), referred to as second value (t21), and minimize a score depending on the following distances:

• a distance between

• the projection, into the plane of the image, of the first point (V1) having predefined coordinates in the road coordinate system, and
• a point (T1) of the first parametric curve defined by the first value (111),

• a distance between

• the projection, into the plane of the image, of the second point (V2) having predefined coordinates in the road coordinate system, and
• a point (T2) of the second parametric curve defined by the second value,

• a distance between

• a vanishing point observed in the image (Vx_B_SPLINE) forming an intersection between a first tangent (tangent_T1) to the first parametric curve at the first point (T1) and a second tangent (tangent_T2) to the second parametric curve at the second point (T2), and
• a reference vanishing point (Vx) forming an intersection between

• the projection, into the plane of the image, of the first boundary of the road model, and
• the proj ection, into the plane of the image, of the second boundary of the road model.

2.  Method according to Claim 1, wherein the third point (U1) and the fourth point (U2) define a first line parallel to the reference line, the rectilinear road model is also defined by a fifth point (W1) located on the first boundary and a sixth point (W2) located on the second boundary, the fifth point (W1) and the sixth point (W2) define a second line parallel to the reference line, the first and second parallel lines being located on either side of the reference line, and wherein the score also depends on at least one distance from among the following distances:

• a distance between

• a straight line of the plane of the image passing through the point (T1) of the first parametric curve defined by the first value (t11) and passing through the point (T2) of the second parametric curve defined by the second value,

• a reference vanishing point (Vy) forming an intersection between

• the projection, into the plane of the image, of the reference straight line of the road model, and
• the projection, into the plane of the image, of the line parallel to the reference line of the road coordinate system.

• a distance between the first tangent (tangent_T1) and the projection, into the plane of the image, of the third point (U1) of the road model,
• a distance between the first tangent (tangent_T1) and the projection, into the plane of the image, of a fifth point (W1) of the first boundary of the road model,
• a distance between the second tangent (tangent_T2) and the projection, into the plane of the image, of the fourth point (U2) of the road model,
• a distance between the second tangent (tangent_T2) and the projection, into the plane of the image, of a sixth point (W2) of the second boundary of the road model.

3.  Method according to either of the preceding claims, wherein the third point (U1) and the fourth point (U2) define a first line parallel to the reference line, the rectilinear road model also being defined by a fifth point (W1) located on the first boundary and a sixth point (W2) located on the second boundary, the fifth point (W1) and the sixth point (W2) defining a second line parallel to the reference line, the first and second parallel lines being located on either side of the reference line, the score also depending on at least one distance between

• a straight line of the plane of the image passing through the point (T1) of the first parametric curve defined by the first value (t11) and passing through the point (T2) of the second parametric curve defined by the second value (t21),
• a reference vanishing point (Vy) forming an intersection between the projection, into the plane of the image, of the first parallel line and of the second parallel line parallel to the reference line of the road coordinate system.

4.  Method according to one of the preceding claims, wherein the score depends on a sum of terms, each term being proportional to the cube of one of the distances.

5.  Method according to one of the preceding claims, wherein at least one of the first parametric curve and the second parametric curve is a B-spline, preferably a B-spline of order 3.

**6.** Method according to one of the preceding claims, comprising a polynomial smoothing step (108) carried out on at least one of the first parametric curve and the second parametric curve, implemented before the road model is computed (110).

**7.** Method according to one of the preceding claims, wherein the alignment parameters of the camera comprise at least one of the following parameters:

- an elevation angle of the camera (2) with respect to the road,
- a pitch angle of the camera (2) with respect to the road,
- an azimuth determined based on the first value (t11), the second value and the intersection vanishing point of the tangents (tangent_T1, tangent_T2),
- an image acquisition altitude with respect to the road,
- a width of the road (L),
- a distance (d) from the ground between the road and the camera (2) that acquired the image.

**8.** Method according to the preceding claim, wherein the score is minimized over a discrete domain of the first value (t11), the second value (t21), the elevation angle, the pitch angle, the distance (d) from the ground between the road and the camera (2), the acquisition altitude and the width of the road (L).

**9.** Computer-readable memory storing instructions able to be executed by the computer in order to carry out the steps of the method according to one of Claims 1 to 8.

**10.** Roadside monitoring system (1) comprising:

- a camera (2) configured to acquire an image showing a first edge of a road and a second edge of the road opposite the first edge,
- a sensor (4), such as a Doppler radar or a lidar, configured to acquire data relating to the trajectory followed by a vehicle travelling on the road, the sensor being fixed with respect to the camera (2),
- a processing module (6) configured to determine alignment parameters of the camera (2) with respect to the road by way of the method according to one of Claims 1 to 8.

[Fig. 1]

[Fig. 2]

[Fig. 3]

Courbe_2 (t2)

Courbe_1 (t1)

[Fig. 4]

[Fig. 5a]

[Fig. 5b]

[Fig. 6]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3096786
- FR 3096786 A

- FR 2949896